# EUROPÄISCHE PATENTANMELDUNG

(11) **EP 1 787 859 A1**
(43) Veröffentlichungstag der Anmeldung: **23.05.2007**
(21) Anmeldenummer: 06023504.1
(22) Anmeldetag: 11.11.2006
(51) Int. Cl.: B60Q 3/04

(54) **Verfahren zum Ansteuern von Kontrollleuchten eines Kraftfahrzeugs**

(30) Priorität: 18.11.2005 DE 102005055091
(71) Anmelder: GM Global Technology Operations, Inc., Detroit, MI 48265-3000 (US)
(72) Erfinder: Kettern-Kohler, Horst, 74722 Buchen (DE)
(74) Vertreter: Daniel, Ulrich W.P.

(57) **Zusammenfassung**

Bei einem Verfahren zum Ansteuern von Kontrollleuchten eines Kraftfahrzeugs, insbesondere in einer Armaturentafel, die in ihrer Intensität veränderbar sind, wird zur Erhöhung der Aufmerksamkeit des Fahrers nach einer Änderung eines Zustands eines mit der Kontrollleuchte angezeigten Parameters die Kontrollleuchte mit erhöhter Intensität betrieben.

## Beschreibung

Die Erfindung bezieht sich auf ein Verfahren zum Ansteuern von Kontrollleuchten eines Kraftfahrzeugs, insbesondere in einer Armaturentafel, die in ihrer Intensität veränderbar sind.

Wie allgemein bekannt, verfügen Kraftfahrzeuge über mehrere Kontrollleuchten oder Warnlampen in einer Armaturentafel im Sichtbereich des Fahrers, um beispielsweise das Übersteigen eines kritischen Parameters dem Fahrer unmittelbar anzuzeigen. Unter anderem sind Kontrollleuchten für einen zu geringen Öldruck, eine zu geringe Batteriespannung, eine angezogene Handbremse sowie für ein eingeschaltetes Abblend- und/oder Fernlicht bekannt, wobei diese Kontrollleuchten in unterschiedlichen Farben leuchten und/oder verschiedene Symbole aufweisen. Die Kontrollleuchten sind üblicherweise als Leuchtdioden, Glühbirnen oder als Halogenlämpchen ausgeführt.

Weiterhin ist es bekannt, dass der Fahrer des Kraftfahrzeugs, insbesondere mit einem Potentiometer, die Helligkeit, mit der die Armaturentafel direkt oder indirekt beleuchtet wird, regeln kann, um beispielsweise bei Dunkelheit nicht durch eine zu helle Beleuchtung der Armaturentafel geblendet zu werden. Üblicherweise ist die Beleuchtung der Armaturentafel, d.h. im Wesentlichen die Beleuchtung der Anzeigeinstrumente, an das Ein- und Ausschalten des Abblendlichts des Kraftfahrzeugs gekoppelt und wird gemeinsam mit dem Abblendlicht ein- und ausgeschaltet. Unabhängig hiervon können die Kontrollleuchten auch bei Tageslicht und ausgeschaltetem Abblendlicht aufleuchten, um dem Fahrer eine wichtige Information mitzuteilen. Wird eine Intensität der Armaturentafelbeleuchtung gedimmt, so wird häufig auch die Intensität, mit der die Kontrollleuchten aufleuchten, entsprechend reduziert.

Die DE 37 14 421 A1 beschreibt eine Schaltungsanordnung für Anzeigeleuchten in Kraftfahrzeugen, bei der die Helligkeit der Anzeigeleuchten mit Hilfe eines Potentiometers veränderbar ist. Dies erfolgt derart, dass zuerst die wichtigen Anzeigeinstrumente, wie Tachometer und Drehzahlmesser, heller beleuchtet werden und erst nachfolgend die weniger wichtigen Anzeigeinstrumente oder Beleuchtungseinrichtungen, wie beispielsweise eine Innenbeleuchtung eines Aschenbechers.

Im Weiteren offenbart die DE 101 62 268 A1 ein dimmbares Anzeigeelement, insbesondere zum Einsatz in Kraftfahrzeugen, das bei festgestellter Dunkelheit gedimmt betrieben werden kann, um somit unter anderem eine Blendung des Fahrers des Kraftfahrzeugs durch ein zu helles Anzeigeelement zu vermeiden.

Darüber hinaus zeigt die DE 44 09 777 A1 eine Einrichtung zur Steuerung der Leuchtdichte einer Anzeigevorrichtung in einem Kraftfahrzeug, wobei mit Hilfe eines Helligkeitssensors die Umgebungshelligkeit festgestellt und dementsprechend die Leuchtdichte selbsttätig zur Vermeidung von Blendungen des Fahrers angepasst wird.

Dies ist insofern nachteilig, als durch das pauschale Verringern der Leuchtintensität bzw. der Helligkeit aller Anzeigeinstrumente und Kontrollleuchten in der Armaturentafel zur Vermeidung von Blendungen des Fahrers während einer Nacht- oder Tunnelfahrt nicht ausgeschlossen ist, dass besonders ein unaufmerksamer Fahrer eine erstmalig aufleuchtende Kontrollleuchte übersieht und somit eine potentiell gefährliche oder verkehrsgefährdende Situation entstehen kann oder eine Beschädigung des Kraftfahrzeugs nicht auszuschließen ist.

Es ist Aufgabe der Erfindung, ein Verfahren zum Ansteuern von Kontrollleuchten der eingangs genannten Art zu schaffen, mit dem zuverlässig ein Fahrer stets auf sich verändernde Zustände bezüglich des Kraftfahrzeugs aufmerksam gemacht wird.

Erfindungsgemäß wird die Aufgabe dadurch gelöst, dass nach einer Änderung eines Zustands eines mit der jeweiligen Kontrollleuchte angezeigten Parameters die Kontrollleuchte mit erhöhter Intensität betrieben wird.

Der Kerngedanke der Erfindung besteht darin, selbst wenn selbsttätig bzw. automatisch oder beispielsweise über ein Potentiometer in an sich bekannter Weise die Intensität aller Anzeigeinstrumente, Kontrollleuchten und dergleichen, beispielsweise in der Armaturentafel des Kraftfahrzeugs, für eine blendungsfreie Nachtfahrt reduziert worden ist, dennoch eine nunmehr erstmals aufleuchtende Kontrollleuchte mit erhöhter Intensität, also einer hohen Leuchtkaft, zu betreiben. Dabei im Rahmen der Erfindung alle Kontrollleuchten mit umfasst, die in einem Sichtbereich des Fahrers, also u. a. in einer Armaturentafel, einer Mittelkonsole oder in einem Überkopfbereich, aber auch im Sichtbereich eines Beifahrers oder von Passagieren auf einer Rücksitzbank angeordnet sind. In gleicher Weise können auch Anzeigen auf einem Display, beispielsweise eines so genannten Infotainmentsystems, mit erhöhter Intensität wiedergegeben werden. Zum Beispiel kann während der Fahrt von einem zentralen Steuergerät des Kraftfahrzeugs, das mit allen Komponenten zu deren Steuerung über Datenbus-Architekturen in Verbindung steht, festgestellt werden, dass ein Öldruck im Verbrennungsmotor zu niedrig ist. Dies wird mit der zugehörigen Kontrollleuchte, die vorzugsweise mit einem entsprechenden Symbol versehen ist, dem Fahrer angezeigt. Um zu gewährleisten, dass auch bei entweder selbsttätig, also automatisch, oder vom Fahrer eingestellter verringerter Beleuchtungsintensität, also z.B. bei einer Tageslichtfahrt mit gedimmten Kontrollleuchten, dieses Warnsignal nicht übersehen wird, wird vom Steuergerät diese Kontrollleuchte mit erhöhter Intensität angesteuert, wonach der Fahrer durch das gegenüber dem Normalzustand hellere Aufblinken oder Aufleuchten auf diesen Umstand aufmerksam gemacht wird. In gleicher Weise kann ein Airbagsteuergerät unmittelbar eine zugehörige Airbag-Kontrollleuchte oder weitere Steuergeräte die ihnen unmittelbar zugeordneten Kontrollleuchten ansteuern.

Selbstverständlich können die Kontrollleuchten entweder im Dauerbetrieb, blinkend oder in sonstiger Weise mit erhöhter Intensität betrieben werden. Im Rahmen der Erfindung sind unter dem Begriff Kontrollleuchten auch alle anderen Arten von Warnlampen, beleuchtbaren Anzeigeinstrumenten, Informationen auf einer Anzeigeeinrichtung eines so genannten Infotainmentsystems oder dergleichen in der Armaturentafel und/oder der Mittelkonsole des Kraftfahrzeugs zu verstehen. Weiterhin können mehrere Kontrollleuchten innerhalb des Kraftfahrzeugs unabhängig voneinander mit erhöhten Intensitäten betrieben werden, d. h. falls sich ein erster Parameter ändert, leuchtet die zugehörige Kontrollleuchte heller auf. Während dieses Aufleuchtens kann eine weitere Kontrollleuchte mit größerer Intensität betrieben werden, falls sich deren zugehöriger Parameter ebenfalls ändert. In gleicher Weise können auch mehrere Kontrollleuchten gemeinsam mit einer höheren Intensität betrieben werden.

Der Vorteil der Erfindung liegt darin, dass die entsprechende hard- und/oder softwaremäßige Auslegung des Steuergeräts praktisch ohne erheblichen Aufwand vorgenommen werden kann, weshalb das Verfahren in einfacher Weise ausführbar ist. Zudem ist durch das Ansteuern der Kontrollleuchten, beispielsweise für das Vorhandensein von Glatteis, für einen eingeschalteten Nebelscheinwerfer oder dergleichen, zuverlässig gewährleistet, dass der Fahrer auf diesen veränderten Umstand aufmerksam wird und dies bei seiner Fahrweise berücksichtigt bzw. entsprechende Maßnahmen ergreift.

Um die Aufmerksamkeit des Fahrers auf eine aufleuchtende Kontrollleuchte weitergehend zu erhöhen, wird bevorzugt die Kontrollleuchte blinkend angesteuert. Das Blinken der Kontrollleuchte kann kurzzyklisch oder beispielsweise unter Pausen zyklisch erfolgen, wonach die Kontrollleuchte, z.B. in Intervallen von ca. 10 Minuten für 30 Sekunden, aufleuchtet. Beispielsweise kann eine Kontrollleuchte zur Anzeige eines notwendigen Ölwechsels oder eines Bremsbelagwechsels für einen gewissen Zeitraum, beispielsweise für 30 Sekunden, mit erhöhter Intensität betrieben werden, um den Fahrer auf diesen Umstand aufmerksam zu machen. Nach einem längeren Zeitraum, beispielsweise 10 Minuten, in dem die Kontrollleuchte mit einer verhältnismäßig niedrigen Intensität betrieben wird, leuchtet diese dann wiederum für z.B. 30 Sekunden auf, um den Fahrer erneut an das mit der Kontrollleuchte dazustellende Ereignis zu erinnern.

Nach einer Weiterbildung wird die Intensität aufgrund eines kraftfahrzeugseitigen Ereignisses, insbesondere einem Öffnen und/oder Schließen einer Tür oder Zentralverriegelung, einem Einschalten einer Zündanlage oder dergleichen, angehoben. Unter dem Begriff kraftfahrzeugseitiges Ereignis ist im Sinne der Erfindung jede Änderung des Zustands am oder im Kraftfahrzeug zu verstehen, der einen unmittelbaren Einfluss auf die Art der Nutzung des Kraftfahrzeugs mit sich bringt. Ebenso stellt eine Änderung eines Nutzers bzw. Fahrers des Kraftfahrzeugs ein kraftfahrzeugseitiges Ereignis dar, wobei ein Fahrerwechsel beispielsweise durch eine vorgenommene Personalisierung des Kraftfahrzeuges, wie beispielsweise eine Sitz-, Lenkrad- und/oder Spiegelverstellung, feststellbar ist. Damit ist die Erhöhung der Intensität, mit der die Kontrollleuchte betrieben wird, von einer beispielsweise von dem Fahrer mittels eines Dimmers vorgenommenen Einstellung unabhängig.

Zur Dauer des Betriebs mit erhöhter Intensität der Kontrollleuchten werden diese vorzugsweise für einen insbesondere einstellbaren Zeitraum mit erhöhter Intensität betrieben. Beispielsweise kann eine einem Nebelscheinwerfer zugeordnete Kontrollleuchte für zehn Sekunden mit einer gegenüber den anderen Kontrollleuchten und Anzeigeinstrumenten in der Armaturentafel erhöhten Intensität betrieben werden, um nachfolgend wiederum mit einer demgegenüber verringerten Intensität zu leuchten. Gegebenenfalls kann bei einer Kontrollleuchte hoher Relevanz, wie z.B. einer Airbagwarnleuchte, dieser Zeitraum auch erst ab einem Losfahren des Kraftfahrzeugs gemessen werden, beispielsweise über das Signal der sich drehenden Räder, wodurch sichergestellt ist, dass der Fahrer sich tatsächlich auf dem Fahrersitz befindet und innerhalb des einstellbaren Zeitraums die entsprechende Mitteilung registrieren kann. Im Weiteren ist es möglich, unterschiedliche Kontrollleuchten über verschieden lange Zeiträume mit erhöhter Intensität zu betreiben, wobei die Länge der Zeiträume von der Relevanz der Kontrollleuchte abhängig ist, wonach beispielsweise eine Kontrollleuchte für eine verhältnismäßig wichtige Funktion, wie beispielsweise die Airbagwarnleuchte, über einen längeren Zeitraum und eine Kontrollleuchte für eine weniger wichtige Funktion über einen demgegenüber kürzeren Zeitraum mit einer relativ hohen Leuchtdichte betrieben wird.

In gleicher Weise ist es möglich, nach einer insbesondere einstellbaren zurückgelegten Wegstrecke, beispielsweise zwei Kilometer, die Kontrollleuchte wiederum mit der ursprünglichen Intensität zu betreiben, wobei das Signal für die zurückgelegte Wegstrecke ebenfalls im Steuergerät vorliegt.

Zur Verringerung der Intensität, nachdem die Kontrollleuchte mit erhöhter Intensität betrieben worden ist, nimmt die Intensität entweder kontinuierlich und somit für das Auge des Fahrers angenehm auf ein verringertes Intensitätsniveau ab oder es erfolgt ein sprungartiges Umschalten zwischen der erhöhten und der verringerten Intensität, um durch diese rasche Änderung den Fahrer noch einmal auf den Umstand des geänderten Parameters aufmerksam zu machen.

Für den Grad der Erhöhung der Intensität, mit der die Kontrollleuchte betrieben wird, wird diese zweckmäßigerweise entweder mit der gleichen Intensität wie im ungedimmten Tagesbetrieb oder mit einer demgegenüber vorübergehend einstellbar verringerten Intensität betrieben. Beispielsweise kann eine Kontrollleuchte, die für einen Normalbetrieb bei Dunkelheit mit nur 20% ihrer maximalen Intensität betrieben wird, zur Erhöhung der Aufmerksamkeit des Fahrers mit 80% ihrer maximalen Intensität betrieben werden.

In einer möglichen Ausgestaltung wird eine Kontrollleuchte mit einer hohen Priorität dauerhaft oder zyklisch mit einer erhöhten Intensität betrieben. Derartige Prioritäten sind vorzugsweise werksseitig eingestellt und können beispielsweise eine Kontrollleuchte zur Warnung vor Glatteis, eine Ölstandskontrollleuchte, eine Airbagkontrollleuchte oder sonstige Kontrollleuchten für Parameter, die für den ordnungsgemäßen Betrieb des Kraftfahrzeugs unerlässlich sind, betreffen. Demgegenüber können Kontrollleuchten für Parameter mit geringerer Priorität, wie beispielsweise ein anstehendes Werkstattintervall, nach einiger Zeit in ihrer Intensität wieder verringert werden, da ein Übersehen einer solchen Kontrollleuchte nicht unmittelbar zu einem Defekt oder einer gefährlichen bzw. verkehrsgefährdenden Situation führt. Zweckmäßigerweise sind die Kontrollleuchten in einer Armaturentafel angeordnet.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Verfahren zum Ansteuern von Kontrollleuchten eines Kraftfahrzeugs, insbesondere in einer Armaturentafel, die in ihrer Intensität veränderbar sind, **dadurch gekennzeichnet, dass** nach einer Änderung eines Zustands eines mit der jeweiligen Kontrollleuchte angezeigten Parameters die Kontrollleuchte mit erhöhter Intensität betrieben wird.

2. Verfahren nach Anspruch 1, **dadurch gekennzeichnet, dass** die Kontrollleuchte blinkend angesteuert wird.

3. Verfahren nach Anspruch 1 oder 2, **dadurch gekennzeichnet, dass** die Intensität aufgrund eines kraftfahrzeugseitigen Ereignisses, insbesondere einem Öffnen und/oder Schließen einer Tür oder Zentralverriegelung, einem Einschalten einer Zündanlage, einem Einschalten einer Funktion oder dergleichen, angehoben wird.

4. Verfahren nach Anspruch 1, **dadurch gekennzeichnet, dass** die Intensität nach einem insbesondere einstellbaren Zeitraum auf das Ausgangsniveau reduziert wird.

5. Verfahren nach Anspruch 1, **dadurch gekennzeichnet, dass** die Intensität nach einer insbesondere einstellbaren zurückgelegten Wegstrecke auf das Ausgangsniveau reduziert wird.

6. Verfahren nach Anspruch 3 oder 4, **dadurch gekennzeichnet, dass** die Intensität kontinuierlich oder sprungartig wieder abnimmt.

7. Verfahren nach einem der Ansprüche 1 bis 5, **dadurch gekennzeichnet, dass** die Kontrollleuchte mit einer maximalen Intensität oder mit einer insbesondere einstellbaren reduzierten Intensität betrieben wird.

8. Verfahren nach einem der Ansprüche 1 bis 6, **dadurch gekennzeichnet, dass** eine Kontrollleuchte mit hoher Priorität dauerhaft oder zyklisch mit der erhöhten Intensität betrieben wird.

9. Verfahren nach einem der Ansprüche 1 bis 8 zur Ansteuerung von Anzeigen auf einem Display, insbesondere eines so genannten Infotainmentsystems.
